# EUROPÄISCHE PATENTSCHRIFT

(11) **EP 0 563 738 B1**
(45) Veröffentlichungstag und Bekanntmachung des Hinweises auf die Patenterteilung: **11.09.1996**
(21) Anmeldenummer: 93104689.0
(22) Anmeldetag: 22.03.1993
(51) Int. Cl.: G21C 13/10, G21C 9/00

(54) **Gebäude zum Einschluss einer kerntechnischen Anlage**
Containment building for nuclear installation
Bâtiment de confinement pour une installation nucléaire

(30) Priorität: 03.04.1992 DE 4211293
(43) Veröffentlichungstag der Anmeldung: 06.10.1993
(73) Patentinhaber: SIEMENS AKTIENGESELLSCHAFT, 80333 München (DE)
(72) Erfinder: Danisch, Rüdiger, Dipl.-Ing., W-8520 Erlangen (DE); Hümmer, Manfred, Dipl.-Ing., W-8552 Höchstadt (DE)

(56) Entgegenhaltungen:
- AT-A- 312 753
- DE-A- 2 554 576
- US-A- 3 322 141
- DATABASE WPI Week 8433, Derwent Publications Ltd., London, GB; AN 84-205107 & JP-A-59 118 966 (HITACHI) 9. Juli 1984
- DATABASE WPI Week 8629, Derwent Publications Ltd., London, GB; AN 86-186667 & JP-A-61 119 891 (TOSHIBA) 7. Juni 1986

## Beschreibung

Die Erfindung betrifft ein Gebäude, insbesondere ein Containment für eine kerntechnische Anlage, mit einer äußeren und einer inneren Schale, die in einem Abstand voneinander angeordnet sind und mit einem Dichtungselement, das sich zwischen den beiden Schalen befindet.

Ein solches Gebäude ist in der DE 25 54 576 Al beschrieben. Dabei ist ein Zwischenraum zwischen einer äußeren und einer inneren Wand eines Gebäudes mit einem plastifizierfähigen Werkstoff verfüllt, der Dichtungseigenschaften aufweist. Dieser Werkstoff ist mit den beiden Wänden fest verbunden.

Das bekannte Gebäude soll Schutz gegen mechanische Einwirkungen von außen bieten. Gegen mechanische Einwirkungen aus dem Innenraum ist es nicht ausgelegt. Infolge einer Krafteinwirkung auf die innere Wand kann diese zerstört werden, was auch eine Beschädigung des Dichtungselementes unmittelbar zur Folge haben könnte.

Der Erfindung lag die Aufgabe zugrunde, ein Gebäude anzugeben, das selbst infolge von mechanischen Einwirkungen aus dem Innenraum des Gebäudes auf die Gebäudestruktur gasdicht bleibt. Ein solches Gebäude soll mit einfachen Mitteln und kostengünstig aufzubauen sein.

Die Aufgabe wird gemäß der Erfindung dadurch gelöst, daß die Dicke des Dichtungselements kleiner ist als der Abstand zwischen den Schalen und daß das Dichtungselement die innere Schale umhüllend und frei oder weitgehend frei von festen Verbindungen mit den Schalen angeordnet ist.

Damit wird der Vorteil erzielt, daß das Dichtungselement beim Einwirken einer Kraft von außen oder von innen in Richtung der Kraft ausweichen kann. Da das Dichtungselement nicht starr angeordnet ist, ist es widerstandsfähig gegen einwirkende Kräfte. Das Gebäude bleibt selbst bei mechanischen und anderen Einwirkungen aus dem Innenraum gasdicht.

Beispielsweise ist das Dichtungselement zwischen den Schalen ohne feste Verbindung mit diesen angeordnet. Weder Dehnungskräfte, noch andere auf das Dichtungselement einwirkende Kräfte, können dann zu einer Beschädigung des Dichtungselementes führen.

Beispielsweise liegt das Dichtungselement am höchsten Punkt der Schalen auf und/oder ist mit ihnen an dieser Stelle verbunden und hängt zwischen den senkrechten Abschnitten der Schalen frei.

Das Dichtungselement kann am höchsten Punkt eines senkrechten Abschnitts einer Schale mit dieser verbunden sein.

Das dient zur Stabilisierung seiner Position.

Das Dichtungselement hängt folglich vergleichbar mit einem Vorhang im Zwischenraum zwischen den beiden Schalen. Einwirkungen verschieben das Dichtungselement aus seiner Position. Wenn die Einwirkung nicht mehr vorhanden ist, schwingt das Dichtungselement in seine ursprüngliche Position zurück. Das Dichtungselement wird aufgrund seiner Anordnung durch einwirkende Kräfte weder zerstört noch beschädigt. Bei einer festen Montierung könnte nämlich das Dichtungselement von seinen Halterungen abgerissen werden.

Die innere Schale schützt das Dichtungselement vor Einwirkungen aus dem Inneren des Gebäudes. Solche Einwirkungen können mechanische Einwirkungen, aber auch Strahlungsund Temperatureinwirkungen sein.

Das Dichtungselement ist beispielsweise ein als solcher bekannter Liner, wie er in einem Containment für ein Kernkraftwerk Verwendung findet.

Ein solcher Liner kann aus Metallblech oder Kunststoff bestehen. Das Dichtungselement kann aber auch aus einem anderen Material, beispielsweise aus Kunststoff, gefertigt sein.

Das Dichtungselement weist beispielsweise mindestens ein Verformungsausgleichsstück auf. Durch ein solches Verformungsausgleichsstück werden Wärmedehnungen ausgeglichen. Die Form des Dichtungselementes wird dann nicht wesentlich verändert, selbst wenn hohe Wärmedehnungen auftreten sollten.

Beispielsweise sind mindestens ein vertikal und ein horizontal wirkendes Verformungsausgleichsstück vorhanden. Es können dadurch Wärmedehnungen in jeder Richtung kompensiert werden.

Als Verformungsausgleichsstück kann das Dichtungselement einen mehrfach Z-förmig gebogenen Abschnitt aufweisen. Dieser Abschnitt kann gestaucht oder gestreckt werden.

Beispielsweise weist die innere Schale des Gebäudes Öffnungen zum Druckausgleich auf. Das innere Gebäude schützt das Dichtungselement (den Liner) vor Einwirkungen aus dem Innenraum des Gebäudes. Eine Druckwelle aus dem Innenraum des Gebäudes wird dann dadurch kompensiert, daß diese Druckwelle durch die Öffnungen in der inneren Schale hindurchläuft und dort auf das weitgehend freihängende Dichtungselement (Liner) trifft. Die innere Schale wird durch die Druckwelle nicht beeinträchtigt, da diese durch die Öffnungen hindurchläuft. Das Dichtungselement kann aufgrund seiner Aufhängung nach außen ausweichen und wird daher auch nicht beschädigt.

Damit wird der Vorteil erzielt, daß auch Druckwellen, die aus dem Inneren des Gebäudes kommen, beherrscht werden können. Das innere Gebäude braucht dazu nicht so konstruiert zu sein, daß es einer Druckwelle standhält. Es ist nur gegen andere zu erwartende Stoßeinwirkungen und auch gegen Temperatur- und Strahlungseinflüsse ausgelegt. Man kommt im Vergleich mit einer festen, gegen Druckwellen ausgelegten Schale mit einer relativ dünnen Schale aus.

Die innere Schale besteht beispielsweise aus mehreren Teilstücken. Diese Teilstücke können vorgefertigt werden, so daß die innere Schale schnell aufgebaut werden kann. Das ist besonders wichtig, falls eine Nachrüstung eines bestehenden Gebäudes gewünscht wird.

Die Teilstücke weisen beispielsweise Fugen zum Druckausgleich auf, durch die hindurch eine Druckwelle zum Dichtungselement gelangen kann. Wenn Fugen zwischen Teilstücken offen bleiben, sind keine besonderen Öffnungen in der inneren Schale erforderlich.

Mit dem Gebäude nach der Erfindung wird der Vorteil erzielt, daß ein Dichtungselement (Liner) eines Gebäudes nicht nur gegen mechanische Stoßeinwirkungen, sowie gegen Temperatur- und Strahlungseinwirkungen geschützt ist, sondern, daß auch Druckwellen aus dem Inneren des Gebäudes das Dichtungselement (Liner) weder zerstören noch beschädigen können.

Selbst ein möglicher Unterdruck im Inneren des Gebäudes kann das Dichtungselement in seiner Stabilität nicht beeinträchtigen. Es wird dann nur soweit nach innen gezogen, bis es an der inneren Schale anliegt. Es kann nicht soweit in den Innenraum hineingezogen werden, daß es beschädigt oder zerstört, oder aus Halterungen herausgerissen werden könnte. Ein Herausreißen aus Halterungen ist schon deshalb unmöglich, weil das Dichtungselement zwischen den beiden Schalen des Gebäudes frei hängt.

Das Gebäude nach der Erfindung wird anhand der Zeichnung näher erläutert:
- Figur 1: zeigt einen vertikalen Schnitt durch ein Gebäude mit einer äußeren und einer inneren Schale und mit einem Dichtungselement;
- Figur 2: zeigt einen horizontalen Schnitt durch ein Gebäude wie in Figur 1;
- Figur 3: zeigt ein Detail A des vertikalen Schnitts durch eine Gebäudewand mit einer inneren Schale aus Fertigteilen und mit einem Verformungsausgleichsstück;
- Figur 4: zeigt ein Detail C im Anschlußbereich Fundamentplatte - Schalen;
- Figur 5: zeigt ein Detail B aus Figur 2 mit einem Verformungsausgleichsstück und mit einer inneren Schale aus Fertigteilen.

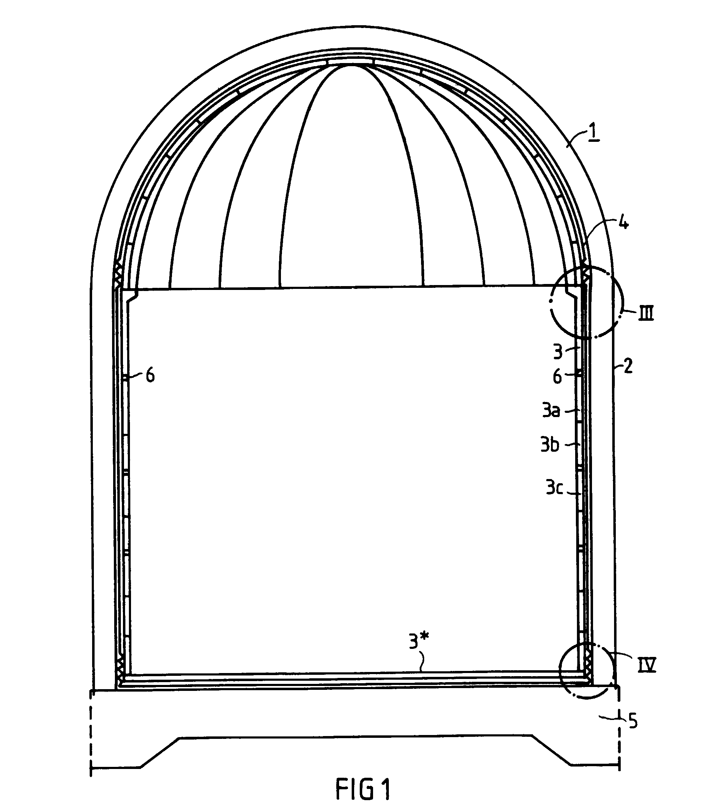

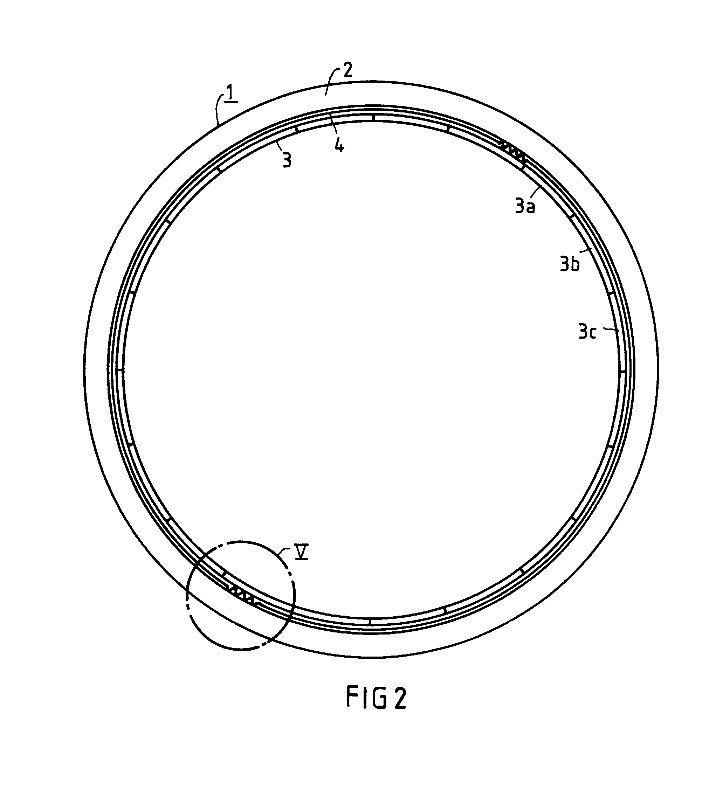

Ein Gebäude 1 nach den Figuren 1 und 2 weist als Wand eine äußere Schale 2 und eine innere Schale 3 auf. Diese beiden Schalen 2 und 3 sind in einem Abstand voneinander angeordnet. Zwischen ihnen befindet sich ein Dichtungselement 4, das zumindest im vertikalen Abschnitt des Gebäudes 1 zwischen den beiden Schalen 2 und 3 wie ein Vorhang frei hängt. Das Dichtungselement 4 kann am höchsten Punkt der inneren Schale 3 auf dieser aufliegen. Es kann auch dort oder am höchsten Punkt des senkrechten Abschnitts der Schalen (2 und/oder 3) befestigt sein. Das Gebäude 1 ruht auf einer Fundamentplatte 5, die unterhalb des Gebäudes die äußere Schale bildet. Das Dichtungselement 4 verläuft am Boden des Gebäudes 1 zwischen der Fundamentplatte 5 und einem als Boden 3* dienenden Teil der inneren Schale 3. Damit die innere Schale 3 nicht Druckstößen standhalten muß, kann sie Öffnungen 6 aufweisen. Eine Druckwelle aus dem Inneren des Gebäudes 1 läuft durch diese Öffnungen 6 hindurch, so daß die innere Schale 3 nicht beschädigt werden kann. Die Druckwelle trifft auf das Dichtungselement 4. Da dieses nicht fest montiert ist, weicht das Dichtungselement 4 nach außen aus. Es wird spätestens durch die äußere Schale 2 des Gebäudes aufgehalten. Nach der Druckwelle schwingt das Dichtungselement 4 in seine Ruheposition zurück. Sollte im Inneren des Gebäudes 1 kurzfristig ein Unterdruck herrschen, dann wird das Dichtungselement 4 an die innere Schale 3 herangezogen. Wenn der Druck wieder normal ist, schwingt es in seine Ruhelage zurück. Da das Dichtungselement 4 nach beiden Seiten ausschwingen kann, kann es auf Druckschwankungen reagieren. Es kann daher durch Druckschwankungen weder beschädigt noch zerstört werden. Hohe Druckeinwirkungen können das Dichtungselement 4 auch nicht in seiner Stabilität beeinträchtigen, da der Ausschwingweg in beiden Richtungen durch die beiden Schalen 2 und 3 des Gebäudes 1 begrenzt ist. Gegen Temperatur- und Strahlungseinflüsse sowie gegen mechanische Stöße, die aus dem Inneren des Gebäudes 1 kommen, ist das Dichtungselement 4 durch die innere Schale 3 geschützt.

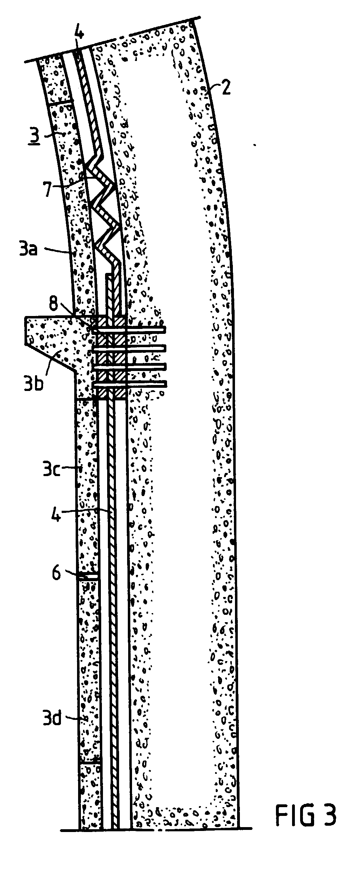

Das Dichtungselement 4 kann ein Liner aus Blech oder aus Kunststoff sein. Die innere Schale 3 kann aus einzelnen Teilstücken 3a - 3c aufgebaut sein, was insbesondere beim Nachrüsten eines Gebäudes vorteilhaft ist. Figur 3 zeigt ein Detail eines senkrechten Schnitts durch ein Gebäude 1. Die äußere Schale 2 ist deutlich dicker als die innere Schale 3, da die äußere Schale 2 Einwirkungen von außen abhält. Im Zwischenraum zwischen den beiden Schalen 2 und 3 ist das Dichtungselement 4 angeordnet, das in dem gezeigten senkrechten Abschnitt wie ein Vorhang im Zwischenraum hängt. Die innere Schale 3 weist Öffnungen 6 für einen Druckausgleich auf. Die innere Schale 3 besteht aus einzelnen Teilen 3a bis d. Das Dichtungselement 4 weist ein Verformungsausgleichsstück 7 auf. Dieses Verformungsausgleichsstück 7 ist ein mehrfach Z-förmig gebogener Abschnitt des Dichtungselementes 4. Das Verformungsausgleichsstück 7 gleicht Wärmedehnungen des Dichtungselementes 4 aus. Es kann dadurch nicht zu Beschädigungen oder Zerstörungen des Dichtungselementes 4 durch Wärmebeanspruchung kommen. Am höchsten Punkt des senkrechten Abschnitts der Schalen 2, 3 ist eine Halterung 8 angeordnet, die den senkrechten Teil des Dichtungselements 4 an einer Schale 2, 3 hält.

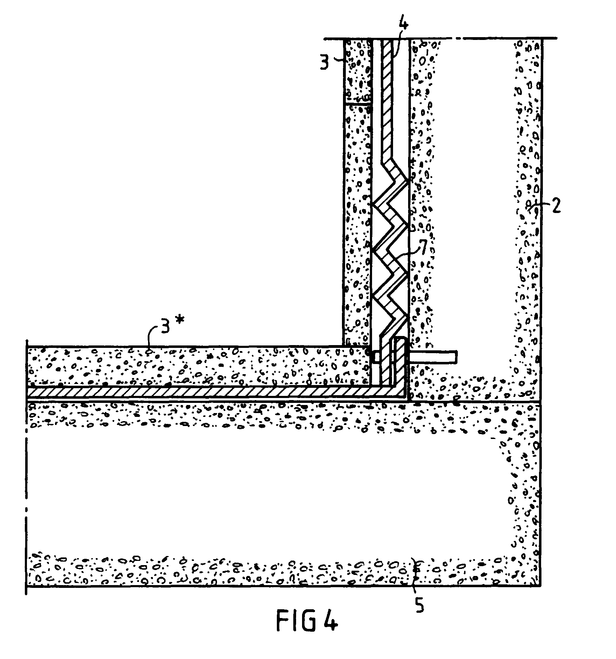

Figur 4 zeigt die Anordnung eines Verformungsausgleichsstücks 7 als Abschlußteil des senkrechten Abschnitts des Dichtungselements 4. Im Bodenbereich ist das Dichtungselement 4 zwischen der Fundamentplatte 5 und dem Boden 3* der inneren Schale 3 eingeklemmt.

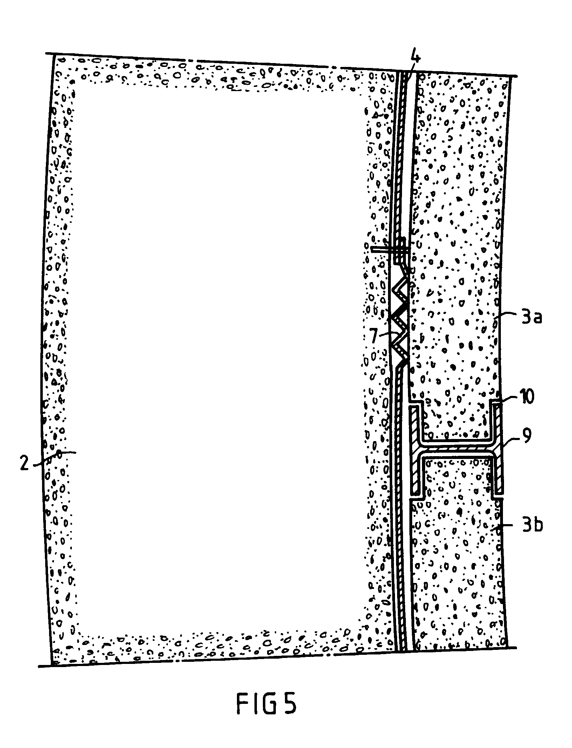

Figur 5 zeigt, daß auch in horizontaler Richtung solche Verformungsausgleichsstücke 7 vorgesehen sind. Teilstücke 3a und 3b der inneren Schale 3 sind durch einen Profilkörper 9 miteinander verbunden, wobei Fugen 10 für den Druckausgleich zwischen dem Innenraum des Gebäudes 1 und dem Zwischenraum zwischen der äußeren Schale 2 und der inneren Schale 3 vorhanden sind. In diesem Zwischenraum befindet sich das Dichtungselement 4.

Das gezeigte Gebäude 1 ist stets gasdicht, selbst wenn aus dem Inneren des Gebäudes 1 Druckstöße auf dessen Wand einwirken, bleibt das Gebäude 1 gasdicht. Auch Temperatureinwirkungen, Strahlungseinwirkungen und mechanische Stöße auf die Wand, die aus dem Innenraum des Gebäudes 1 kommen, können eine Undichtigkeit nicht hervorrufen.

## Patentansprüche

1. Gebäude (1), insbesondere Containment für eine kerntechnische Anlage, mit einer äußeren (2) und einer inneren Schale (3), die in einem Abstand voneinander angeordnet sind und mit einem Dichtungselement (4), das sich zwischen den beiden Schalen (2,3) befindet und die innere Schale (3) umhüllt, wobei die Dicke des Dichtungselementes (4) kleiner ist als der Abstand zwischen den Schalen (2 und 3) **dadurch gekennzeichnet**, daß das Dichtungselement (4) die innere Schale (3) umhüllend und frei oder weitgehend frei von festen Verbindungen mit den Schalen (2 und 3) angeordnet ist und dabei zumindest inTeilbereichen des Schalen (2,3) zum Zwecke einer freien Beweglichkeit von beiden Schalen (2,3) beabstandet ist.

2. Gebäude (1) nach Anspruch 1,
**dadurch gekennzeichnet**, daß das Dichtungselement (4) am höchsten Punkt der Schalen (2 und 3) aufliegt und/oder mit diesen verbunden ist und zwischen den senkrechten Abschnitten der Schalen (2 und 3) frei hängt.

3. Gebäude (1) nach Anspruch 1 oder 2,
**dadurch gekennzeichnet**, daß das Dichtungselement (4) am höchsten Punkt eines senkrechten Abschnitts einer Schale (2 oder 3) mit dieser verbunden ist.

4. Gebäude (1) nach einem der Ansprüche 1 bis 3,
**dadurch gekennzeichnet**, daß das Dichtungselement (4) ein Liner ist.

5. Gebäude (1) nach Anspruch 4,
**dadurch gekennzeichnet**, daß der Liner aus Metallblech oder Kunststoff besteht.

6. Gebäude (1) nach einem der Ansprüche 1 bis 5,
**dadurch gekennzeichnet**, daß das Dichtungselement (4) mindestens ein Verformungsausgleichsstück (7) aufweist.

7. Gebäude (1) nach Anspruch 6,
**dadurch gekennzeichnet**, daß das Dichtungselement (4) mindestens ein vertikal und ein horizontal wirkendes Verformungsausgleichsstück (7) aufweist.

8. Gebäude (1) nach einem der Ansprüche 6 oder 7,
**dadurch gekennzeichnet**, daß das Dichtungselement (4) als Verformungsausgleichsstück (7) einen mehrfach Z-förmig gebogenen Abschnitt aufweist.

9. Gebäude (1) nach einem der Ansprüche 1 bis 8,
**dadurch gekennzeichnet**, daß die innere Schale (3) Öffnungen (6) zum Druckausgleich aufweist.

10. Gebäude (1) nach einem der Ansprüche 1 bis 9,
**dadurch gekennzeichnet**, daß die innere Schale (3) aus mehreren Teilstücken (3a, 3b, 3c) besteht.

11. Gebäude (1) nach Anspruch 10,
**dadurch gekennzeichnet**, daß die Teilstücke (3a, 3b) Fugen (9) zum Druckausgleich zwischen sich freilassend angeordnet sind.

## Claims

1. A building (1), in particular a containment for a nuclear facility, having an outer shell (2) and an inner shell (3) that are spaced apart from one another and a sealing element (4) that is located between the two shells (2, 3) and envelops the inner shell (3), the thickness of the sealing element (4) being less than the distance between the shells (2 and 3),
characterised in that
the sealing element (4) is arranged so that it envelopes the inner shell (3) and is free or to a large extent free of fixed connections to the shells (2 and 3) and is spaced from the two shells (2, 3) at least in partial regions of the shells (2, 3) to provide freedom of movement.

2. A building (1) according to claim 1, characterised in that the sealing element (4) is supported at the highest point of the shells (2 and 3) and/or is connected to them and hangs freely between the vertical portions of the shells (2 and 3).

3. A building (1) according to claim 1 or claim 2, characterised in that the sealing element (4) is joined to a shell (2 or 3) at the highest point of a vertical portion thereof.

4. A building (1) according to one of claims 1 to 3, characterised in that the sealing element (4) is a liner.

5. A building (1) according to claim 4, characterised in that the liner is formed of sheet metal or plastic.

6. A building (1) according to one of claims 1 to 5, characterised in that the sealing element (4) has at least one deformation compensating part (7).

7. A building (1) according to claim 6, characterised in that the sealing element (4) has at least one vertically acting and one horizontally acting deformation compensating part (7).

8. A building (1) according to claim 6 or claim 7, characterised in that the sealing element (4) has as deformation compensating part (7) a segment bent several times to a Z-shape.

9. A building (1) according to one of claims 1 to 8, characterised in that the inner shell (3) is provided with openings (6) for pressure equalisation.

10. A building (1) according to one of claims 1 to 9, characterised in that the inner shell (3) is made up of a plurality of sections (3a, 3b, 3c).

11. A building (1) according to claim 10, characterised in that the sections (3a, 3b) are arranged with joints (9) between them left open for pressure equalisation.

## Revendications

1. Bâtiment (1), notamment bâtiment de confinement d'une installation de génie nucléaire, comportant une coquille extérieure (2) et une coquille intérieure (3), qui sont à distance l'une de l'autre, et un élément d'étanchéité (4), qui se trouve entre les deux coquilles (2,3) et qui enveloppe la coquille intérieure (3), l'épaisseur de l'élément d'étanchéité (4) étant inférieure à la distance entre les coquilles (2 et 3), caractérisé par le fait que l'élément d'étanchéité (4) est disposé de manière à envelopper la coquille intérieure (3) et ne comporte pas de liaison fixe ou est exempt, dans une grande mesure, de liaisons fixes avec les coquilles (2 et 3) et est à distance, au moins dans des zones partielles, des coquilles (2,3), pour permettre une libre mobilité des coquilles (2,3).

2. Bâtiment (1) suivant la revendication 1, caractérisé par le fait que l'élément d'étanchéité (4) s'applique au point le plus haut des coquilles (2 et 3) et/ou est relié à ces dernières et pend librement entre les parties verticales des coquilles (2 et 3).

3. Bâtiment (1) suivant la revendication 1 ou 2, caractérisé par le fait que l'élément d'étanchéité (4) est relié à une coquille (2 ou 3), au point le plus haut d'une partie verticale de cette coquille.

4. Bâtiment (1) suivant l'une des revendications 1 à 3, caractérisé par le fait que l'élément d'étanchéité (4) est une peau d'étanchéité.

5. Bâtiment (1) suivant la revendication 4, caractérisé par le fait que la peau d'étanchéité est formée d'une tôle métallique ou est en matière plastique.

6. Bâtiment (1) suivant l'une des revendications 1 à 5, caractérisé par le fait que l'élément d'étanchéité (4) a au moins une pièce (7) de compensation des déformations.

7. Bâtiment (1) suivant la revendication 6, caractérisé par le fait que l'élément d'étanchéité (4) a au moins une pièce (7) de compensation des déformations, qui agit verticalement et une pièce de compensation des déformations qui agit horizontalement.

8. Bâtiment (1) suivant l'une des revendications 6 ou 7, caractérisé par le fait que l'élément d'étanchéité (4) a, en tant qu'élément (7) de compensation des déformations, une partie coudée de façon multiple en forme de Z.

9. Bâtiment (1) suivant l'une des revendications 1 à 8, caractérisé en ce que la coquille intérieure (3) comporte des ouvertures (6) pour réaliser une compensation de pression.

10. Bâtiment (1) suivant l'une des revendications 1 à 9, caractérisé en ce que la coquille intérieure (3) est constituée de plusieurs pièces (3a,3b,3c).

11. Bâtiment (1) suivant la revendication 10, caractérisé par le fait que les pièces (3a,3b) sont disposées de manière à laisser subsister entre elles des joints (9) permettant la compensation de pression.
